# EUROPEAN PATENT APPLICATION

(11) **EP 2 688 355 A1**
(43) Date of publication of application: **22.01.2014**
(21) Application number: 13176989.5
(22) Date of filing: 18.07.2013
(51) Int. Cl.: H04W 76/02

(54) **Access layer interface in a cellular telecommunications network**

(30) Priority: 18.07.2012 ES 201231131
(71) Applicant: Vodafone IP Licensing Limited, The Connection Newbury Berkshire RG14 2FN (GB); Vodafone España, S.A.U., 28108 Alcobendas (ES)
(72) Inventor: De Pasquale, Andrea, 28108 Alcobendas (ES); Dominguez, Francisco Javier, 28108 Alcobendas (ES)
(74) Representative: Ferrara, Simone

(57) **Abstract**

A method and network interface are described, said interface being able to enable a MultiRAT aggregated LTE and UMTS simultaneously with one terminal possibility as well as any other traffic steering intelligence capable to take advantage of load and coverage info of different systems like LTE and UTMS.

## Description

### FIELD OF THE INVENTION

The invention relates to interfaces in the access layers of mobile wireless communications networks. In particular, the invention relates to the efficient management of mobile wireless communications networks which offer a plurality of different radio access technologies.

### BACKGROUND

With the introduction of 4th Generation LTE (4G) systems the multi-RAT (Radio Access Technology) mobile Networks of the near future will be characterised by co-existence of different radio access technologies, such as UMTS-UTRAN, and LTE among others. The mobile network operators will have to choose the best radio access technology to be camped or to carry a service at any time. Therefore, the efficient management of the radio network is very important hence there is a necessity of information exchange between 3G and LTE (4G) to maximise the spectral efficiency of the system (both networks are overlapped).

Nowadays there are solutions related to this problem such as those available at http://mobilesociety.typepad.com/mobile_life/2009/07/how-the-lte-core-network-talks-to-umts-and-gsm.html, describing the use of a special APN that triggers the use of a combined GGSN/PDN-GW when the connection is established or at http://www.althos.com/tutorial/UMTS-LTE-tutorial-network-interfaces.html where a figure shows key UMTS LTE network elements and how they interface with each other UMTS network interfaces define the characteristics and processes that are used to connect network elements to each other or to other systems. This two solutions links make reference to the S3 interface, which interface connects the Core Network from LTE (MME) with the Core Network from 2G/3G (SGSN); actually this may allow the exchange of certain information of radio access network load but quite limited in volume and efficiency.

The Radio Access technologies (RATs) adopted in cellular telecommunications networks are conveniently discussed in terms of "generations". Second generation (2G) technologies include GSM, GPRS, D-AMPS and CDPD, for example: while third generation (3G) technologies include UMTS, CDMA2000 and WD-CDMA for example. In certain "Beyond 3G" scenarios sometimes referred to as "4G", Long Term Evolution (LTE) technology is introduced. The "earlier" generations have not in general fallen into disuse and it is typical that LTE technology is implemented in cellular network architectures that already provide access using existing 3G (UMTS) and 2G (GSM-GPRS) technologies (with substantially overlapping geographical coverage): the term "multi-RAT" is commonly used to describe such cellular network architectures.

With the introduction of 4th Generation LTE systems the multi-RAT mobile networks of the near future will be characterised by co-existence of different radio access technologies, such as UMTS-UTRAN, and LTE. The mobile network operators will have to choose the best radio access technology to be camped or to carry a service at any time. Therefore, the efficient management of the radio network is very important hence there is a necessity of information exchange between RATs (in particular between 3G and LTE) to maximise the spectral efficiency of the system where the RATs provide overlapping coverage.

At the moment, when each of these three radio technologies (GPRS, UMTS, LTE) is available for to users, every User Equipment (UE) would, by default, camp on the technology assigned the highest priority level by the mobile network operator, i.e. LTE over UMTS over GPRS. A UE is only typically redirected to another technology where there is a high likelihood of losing and/or coverage or capacity. This criterion for redirecting a user to a radio technology is not optimum for most of the applications, as the requirements (e.g., latency sensitivity) for each application are different.

Subscribers who wish to access mobile packet services from a portable computing device, such as a laptop PC or a netbook, have a number of options: the portable device may have a suitable wireless wide area access network (WWAN) module or embedded cellular radio access modem; he may choose to couple his device physically or via a short range wireless technology (such as Bluetooth [RTM] or Zigbee[RTM]) to a cellular communications device; or he may use a dedicated external cellular modem, which couples to the portable device via an existing interface such as PCMCIA or USB. It is known that such access devices may be adapted to provide access to more than one different radio access networks - while being active on only one access network at any one time: thus an LTE-enabled USB modem dongle may also have 2G and/or 3G capabilities.

Subscribers may wish to avail themselves of more than one of these packet service access options simultaneously. In one typical arrangement, the user obtains two commercially available dedicated cellular modem devices, typically USB dongles, and couples both modems to his computing device.

It is known to provide a core network interface between UMTS and LTE network elements: the interface, S3, connects the Core Network from LTE (MME) with the Core Network from 2G/3G (SGSN) It is the interface between SGSN and MME and it enables user and bearer information exchange for inter 3GPP access network mobility in idle and/or active state, it is based on Gn reference point as defined between SGSNs. While this interface allows an exchange of radio access network load information, that exchange is very limited in volume and efficiency since there's no direct routing of data flow.

### SUMMARY OF THE INVENTION

In accordance with a first aspect of the invention there is provided an access layer interface between different radio access technologies RATs.

The access layer interface implemented and the method thereof allow not only the exchange of information of the cell load, but also the exchange of information at system level, including different RATs information, UE under coverage information, and detailed load info since the interface for device management in a multiradio communication network hereby described has access to least one of a first and a second RATs [Radio Access Technology], said access comprising a connection to a port of the RNC of a first RAT and a connection to a port of one Node B of the second RAT. Said interface may work with any entity belonging to any RAT, though the preferred options are those aiming to a 3G/UMTS RAT and a LTE RAT, the latter comprising eNodeB's instead of NodeB's.

Another aspect of the invention, related to one of the possible scenarios when the first RAT is LTE and the second RAT is UMTS, is the possibility of the eNodeB belonging to the first RAT being a singleRAN node then the connection to the RNC from the eNodeB is accomplished by means of the NodeB from the UMTS RAT acting as a bridge establishing a direct connection between said eNobeB and said NodeB; said connection may be established between the IUB of the UMTS and LTE basebands. Said bridge connection might be stablished bye means of the Remote Radio Head [RRH], the scenario would be similar being the first RAT a LTE-RAT and the second RAT a UMTS-RAT then the eNodeB belonging to the first RAT remains being a singleRAN but the connection to the port of the RNC and to the port of the NodeB is established by means of the RRH [Remote Radio Head] having connections to both the first and second RATs, thus said RRH acting as a bridge.

Since the interface hereby described is designed to gather and access different data from the network entities of the different RATs, some elements are needed in order to manage said data; that's the reason why the interface is furnished with an IP stack, an information retrieval module connected to at least one network entity belonging to one of the RATs for retrieving information related to a cell where a UE [User Equipment] is allocated and information from at least one mobile terminal, and a command module adapted to send commands to the network entities of the RATs in order to deliver traffic and control plane information.

The implementation of the interface may be useful for device/s management in a multiradio communication network; when the network comprises at least two RATs, a first RAT [Radio Access Technology] and a second RAT [Radio Access Technology],at least one UE [User Equipment] allocated in the first RAT [Radio Access Technology], and of course the access layer interface hereby described accessing at least one network entity of one of the RATs. The interface is able to establish at least one connection between a first RAT is LTE and a second RAT is UMTS since it, the interface, has access to said network entities; once connected it starts measuring, by means of the information retrieval module of the access layer interface, certain measurements on cells controlled by a second network entity different to a first network entity controlling the cell where the User Equipment is allocated, said measurements comprise: capacities that the operator reserves for specific traffic classes or services might be taken into account since they limit the maximum load that is possibl, load for real time (RT),load for non-real time (NRT) services for uplink (UL) and downlink (DL) both loads measured in a relative amount of resources used/free or an absolute amount of free capacity (e.g. in Kbps) in the cell, may be determined according to the following traffic classes: conversational, streaming, interactive and background. Once said measurements are accomplished the interface needs some information related to the UEs controlled by each network entity, then the interface triggers a retrieiving event for gatherin static information on User Equipments controlled by said second network entity. With all that info, the interface may be able to enable said network entities (eNB, RNC and NodeB) to trigger commands to setup, modify and release control plane and user plane connections between both RATs (i.e. a first RAT being UMTS and the second RAT is LTE.)

The interface of the invention might be used to perform handovers from a first to a second RAT and viceversa, i.e. the interface might trigger the eNB to perform a handover from LTE to 3G wherein the certain measurements comprises a 3G Cell load related to a Percentage of 3G Cell Capacity in terms of Hardware usage or to perform a handover from 3g to LTE wherein the certain measurement comprises a LTE Cell load expressed as percentage of used/free Cell Capacity in terms of: TX power, UpLink capacity, and Hardware resources for signalling/user plane.

The interface is also necessary to establish dedicated connections for user plane data transmission that enables the hybrid data connection between a 3G and a 4G data connection (where LTE and UMTS connections are aggregated simultaneously for a single portable computing device having more than one radio access terminal). The interface may also be used in traffic steering more generally, taking advantage of load and coverage information of different radio access systems like LTE and UMTS.

By contrast with previously known configurations, the invention applies only to the Access Layer, and for this reason has no impact on elements that belong to the Core Network.

The access layer interface implemented by the method allows for a rich exchange of information and commands between the RATs, especially when they provide overlapping coverage. This is particularly advantageous as it allows commands generated by a command module, preferably allocated each controller entity in each RAT, to make the Initial RAT selection more efficient, thereby extending Common Call Admission Control, congestion control and an intelligent packet scheduling amongst other things to span more than one RAT.

Furthermore the invention supplies the information needed by Radio Resource Management Processes in the different nodes of the network in order to improve decisions upon how users should be distributed in the different RATs.

The invention hereby posed provides a solution to above posed problem, since the method and the interface hereby described allow not only the exchange of information of the cell load, but also the exchange of information at system level, including different RATs information, UE under coverage information, and detailed load info. It is also necessary the new interface to establish dedicated connections for user plane data transmission that enables the MultiRAT aggregated LTE and UMTS simultaneously with one terminal possibility as well as any other traffic steering intelligence capable to take advantage of load and coverage info of different systems like LTE and UTMS.

In addition, the object of the invention is aimed to the Access Layer, and for this reason has no impact on elements that belong to the Core Network.

The method of the invention is based in the exchange of information and commands between the RATs, that might be overlapped, in order to use a commands generated by a command module in order to make more efficient the Initial RAT selection, to make a Common Connection Admission Control, congestion control and an intelligent packet scheduling among other thing by selecting an Initial RAT, enabling a Common Call Admission Control, enabling a congestion control procedure and/or enabling packet scheduling.

In a preferred embodiment of the invention it's provided a method and an interface for supplying the information needed by the Radio Resource Management Processes in the different nodes of the network in order to improve decisions how users should be distributed in the different RATs.

Said interface allows the exchange of information between at least two different network entities of a radio network; in order to establish a connection the interface of the invention may have at least two different input/output ports involved; i.e. the interface may establish a UMTS-LTE connection wherein two different RATs are involved (a first RAT belonging to UMTS technology and a second RAT belonging to LTE technology), in this case a logical level connection is provided between the physical ports of the eNodeB (via S1), the logical connection may be defined at the RNC.

As the skilled person would notice from the above, the interface of the invention may be implemented in at least three different scenarios; in a first scenario the interface acts between a UMTS RAT and a LTE wherein the NodeB of the LTE RAT is a SingleRAN Node, then two connections are established at the LTE NodeB, a first connection (an internal connection) between the LTE NodeB and the UMTS NodeB (this connection may be accomplished by means of the RNC) and a second connection between the IuB baseband of the UMTS and the IuB baseband of the LTE, thus a connection is established from the UMTS NodeB to the LTE NodeB and from the latter to the RNC; the UMTS NodeB may act a bridge (bridge connection). In a second scenario a connection is established between a Iur port of the RNC to a physical port of a eNodeB belonging to a LTE RAT, this scenario might be accounted ad the best mode for this interface of the invention. In a third scenario the interface of the invention where the SingleRAN node remains the interface encompasses the use of Remote radio heads (RRHs), since remote radio head contains the base station's RF circuitry plusanalog-to-digital/digital-to-analog converters and up/down converters, they can be used as a bridge since the RRH is connected to both RATs, namely UMTS and LTE. RRHs also have operation and management processing capabilities and a standardized optical interface to connect to the rest of the base station; the RRH acts a connection bridge between the UMTS and LTE.

### BRIEF DESCRIPTION OF THE DRAWINGS.

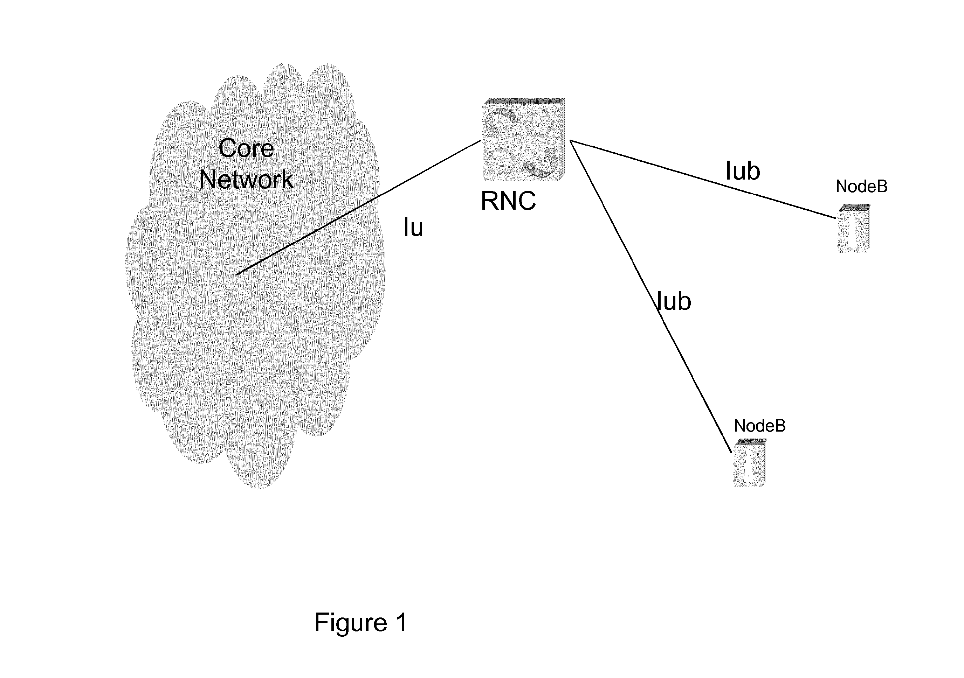

Figure 1. Depicts an embodiment of the prior art.

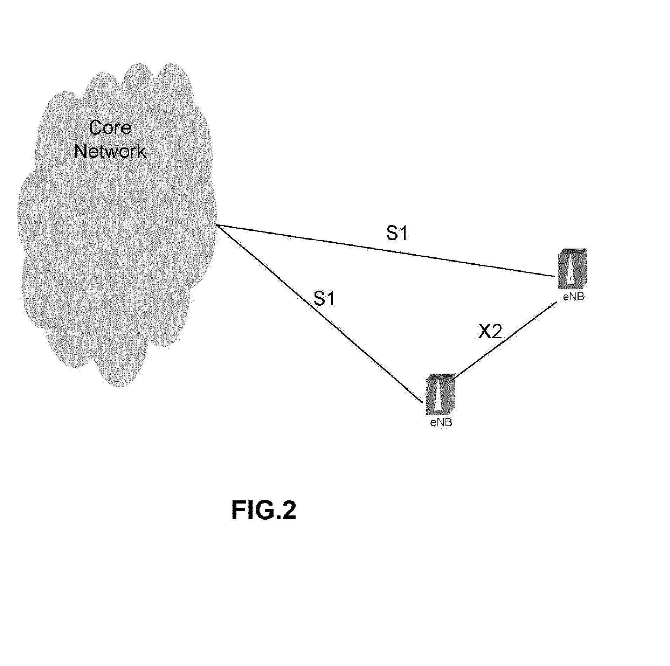

Figure 2. Depicts a picture of the prior art.

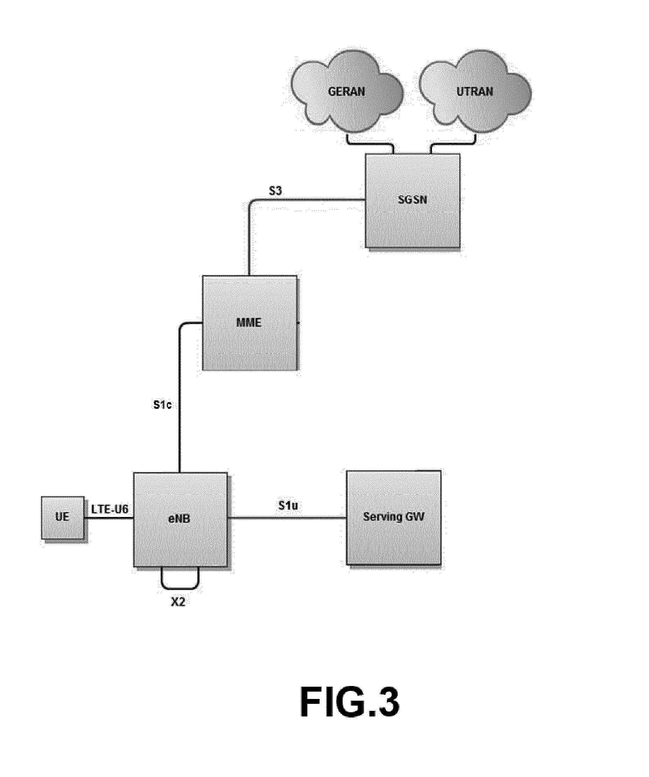

Figure 3. Illustrates a prior art Multi-RAT arrangement having an S3 interface standardised in 3GPP between core network elements of respective LTE and UMTS networks.

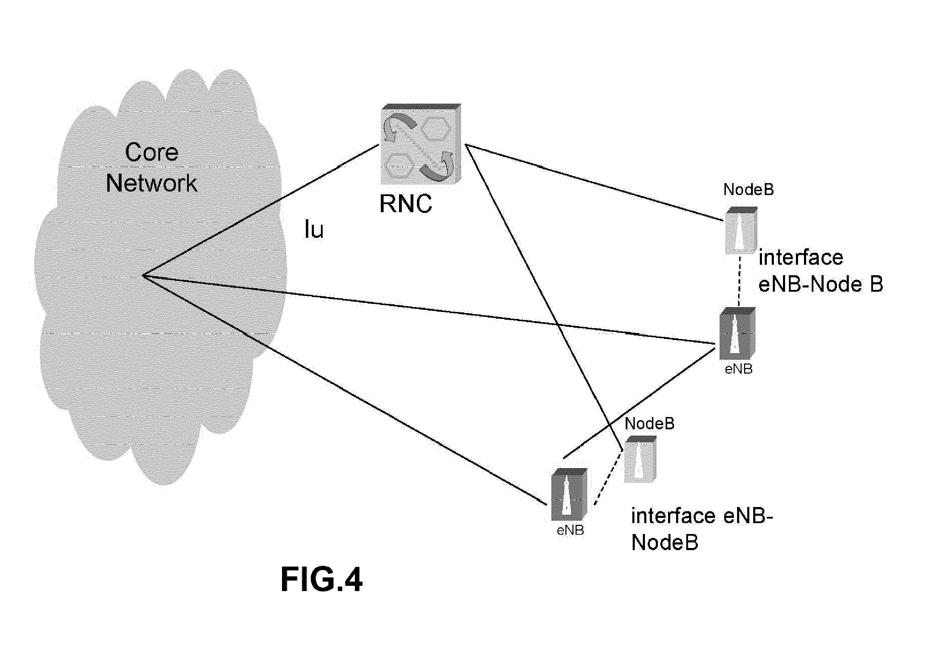

Figure 4. Depicts a diagram of a possible deployment of the interface of the invention where the interface is arranged between eNodeB's and NodeB's.

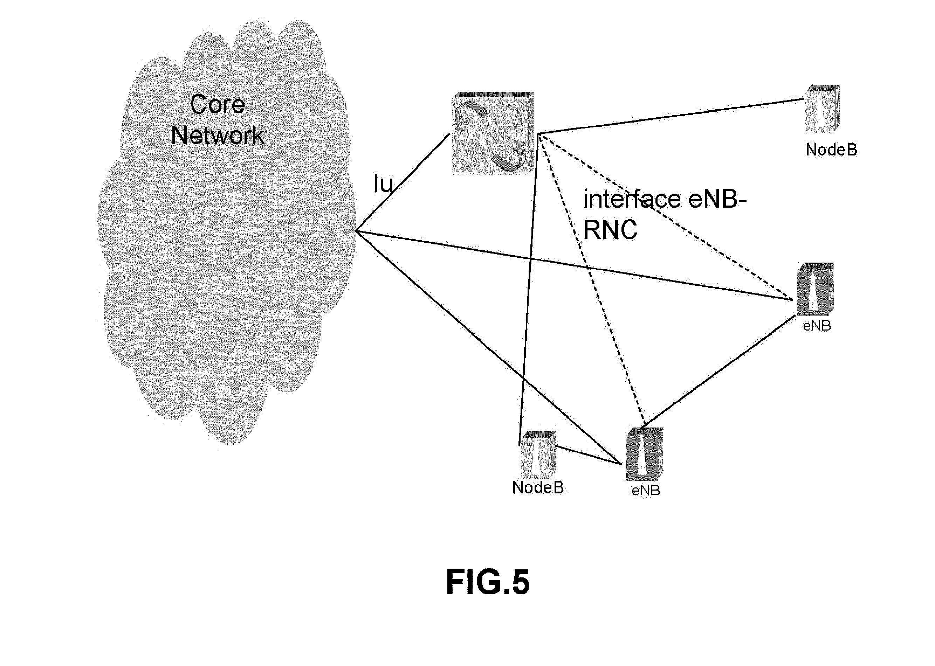

Figure 5. Depicts a diagram of a possible deployment of the interface of the invention the interface is arranged between eNodeB's and the RNC.

### DETAILED DESCRIPTION OF A PREFERRED EMBODIMENT

There now follows a more detailed description of the invention.

According to a preferred embodiment of the invention, information exchange between network entities of a first RAT [Radio Access Technology] those of a second RAT [Radio Access Technology], said information may be related to: Load information of cells of the second RAT (detailed information on the cell resource status and cell capabilities).

Cell capacity class indicator providing just a relative estimation of the cell capacity in overlapping cells of the second RAT. UE [User Equipment] specific information of the customers covered by the second RAT node e.g. the user terminal's capabilities, user's settings or preferences, more accurate information about user's location, subscriber related information (e.g. subscription to specific services).

In an aspect of the invention, a combination of some or all of the above mentioned information is used to provide better mobility management (e.g. in the case of inter-RAT handover), resulting in increased user satisfaction and a more efficient usage of multiRAT network resources. Efficient usage of multiRAT network resources particularly includes applying a better load balancing in whole radio access network rendering i.e. the possibility of enabling hybrid connections (LTE/UMTS connections).

Commands to establish connection between network entities such as eNB and RNC or Node B with the purpose of deliver traffic and control plane information through the interface of the invention that can be used, for example, to establish a simultaneous connection through LTE and WCDMA using one unique terminal or UE. Since transport solutions should be compatible with legacy 3G RNC and current LTE implementations, the invention employs an IP stack.

As depicted in figured 4 and 5, the interface of the invention may be deployed in a multiRAT communications network comprising two different RATs, in one embodiment of the invention the first RAT is LTE and the second RAT is UMTS. The interface makes certain measurements - via an information retrieval module - on cells controlled by a second network entity (eNB or RNC/NodeB) different to a first network entity (eNB or RNC/NodeB) controlling the cell where the User Equipment is allocated (i.e. dynamic information); then performs a retrieval of static Information on User Equipments controlled by said second network entity (eNB or RNC/NodeB); then the method of the invention enables network entities to trigger commands to setup, modify and release control plane and user plane connections between both technologies (eNB or RNC/NodeB). The load in a cell can be basically distinguished in load for real time (RT) and load for non-real time (NRT) services for uplink (UL) and downlink (DL). In addition a cell capacity class is provided to give a relative indication of the cell capacity amongst all cells; in general cell specific information is also used to consider groups of users that are accessing parts of the network (e.g. a cell) with certain characteristics (e.g. for a specific service); load information of the neighbouring LTE and UMTS cells is an important input, as well.

The simplest indication of cell load would be the relative amount of resources used/free, although best measurement to determine cell load is absolute amount of free capacity (e.g. in Kbps) in the cell.

Taking the above posed example, the following Common Measurements would be useful in an eNB for a decision on 4G to 3G handovers:
- 3G Cell load in (e.g. Percentage of 3G Cell Capacity in terms of Hardware usage),

The following Common Measurement would be useful in a RNC for 3G to 4G handovers:
- LTE Cell load expressed as percentage of used/free Cell Capacity in terms of: TX power, UpLink capacity, and Hardware resources for signalling/user plane.

In an alternative embodiment, in addition to the load also the capacities that the operator reserves for specific traffic classes or services might be taken into account since they limit the maximum load that is possible. The separation in Real Time /Non Real Time might be refined by considering the 4 traffic classes: conversational, streaming, interactive and background.

The method hereby described also counts for cell capability where supported RATs, radio access mode, radio access option are implicitly considered by having network defined neighbour cell lists of cells that the UE has to monitor. The UMTS neighbouring cell information is normally setup via management interface in the eNB. However, the eNB does not receive all the necessary information about the neighbouring UMTS cell capability, by UMTS cell capability, it is meant the information on the support by the UMTS neighbour of throughput affecting features like 64QAM, MIMO, DC-HSDPA, DC MIMO, Dual Carrier HSUPA etc.; this information is necessary in the eNB in the cell candidate selection at call setup and handover. The knowledge about the cell relations i.e. overlapped Macro/Micro cells or in general Hierarchical Cell Structure (HCS) is valuable in the eNB/RNC in order to direct the traffic to the most optimal cell.

Last but not least the method and interface of the invention use information from the UE, this information can be taken into account by the object of the invention to offer UEs the most appropriate resource(s) that the UE is able to manage and also to serve client needs and to optimize the traffic in the network. This information is well known by a system in which a PS connection is started, but it is not known by any other RAT [Radio Access Technology] that are potential handover target for this PS connection. Without this information the system could only decide from the network point of view without taking UE/user related information into account; thus, the object of the invention takes into account UE radio access capabilities which may indicate UE power class, supported frequency bands, supported positioning methods and modulations, supported RATs (GSM, UMTS, CDMA2000), radio access modes (FDD, TDD) and options (1.28Mcps TDD, 3.84Mcps) multi-RAT capabilities, security, measurement and UE positioning capabilities, supported bit rates and UE capabilities in general such as size/resolution of the screen, support for Java engine, GPS-receiver available/features. Other UE characteristics: e.g. model and software version (e.g. IMEISV), UESBI may also be accounted or information related to the UE position, e.g. accurate geographical location of the UE by using positioning methods like BS based georeference, specially satellite based positioning (GPS, GALILEO,..) or some other data that could be of importance such as user subscriptions (e.g. for specific services, charging aspects, QoS, roaming data) and UE's activated services/subscriber settings since depending on the agreements between the user and the operator the user will be allowed to use different services. These agreements may differ from the capabilities of the UE that the user is using.

In a yet alternative embodiment of the invention corresponding to a scenario comprising a connection with UTRAN sharing (different operators share equipment in a specific area for cost reduction reasons) it will be of importance to know the access rights of the user/UE to serve users/UEs which have some access restrictions.

In a further embodiment of the invention information is considered about ongoing services for a certain UE, namely Control Plane and User Plane connections. This allows set some commands to establish, modify and release connections between both systems, said connections can be used to aggregate traffic over 3G and LTE simultaneously for the same user. The user plane connection can be setup between network elements different to the Control plane network elements points.

## Claims

1. Interface for device management in a multiradio communication network **characterised by** having access to at least one of a first and a second RATs [Radio Access Technology], wherein the first RAT is LTE and second RAT is UMTS and said access comprises a connection to a port of the eNodeB of LTE and a connection to a port of the RNC of UMTS.

2. Interface according to claim 1 wherein the eNodeB belonging to the first RAT is singleRAN and the connection to the RNC from the eNodeB is accomplished by means of a NodeB UMTS acting as a bridge establishing a direct connection between said eNobeB and said NodeB.

3. Interface according to claim 2 further using a IUB connection between the of the UMTS baseband and the RNC.

4. Interface according to claim 1 wherein the eNodeB belonging to the first RAT is singleRAN and the connection to the port of the RNC and to the port of the NodeB is established by means of a RRH [Remote Radio Head] having connections to both the first and second RATs, said RRH acting as a bridge.

5. Interface according to any one of preceding claims further comprising:
- an IP stack,
- a information retrieval module connected to at least one network entity belonging to one of the RATs adapted to retrieve information related to a cell where a UE [User Equipment] is allocated,
- retrieving information from at least one mobile terminal, and
- a command module adapted to send commands to network entities of the RATs in order to deliver traffic and control plane information.

6. Method for device management in a multiradio communication network said network comprising at least a first RAT [Radio Access Technology] and a second RAT [Radio Access Technology],at least one UE [User Equipment] allocated in the first RAT [Radio Access Technology], and a access layer interface accessing at least one network entity of one of the RATs [Radio Access Technology] the method comprising:
- establishing a connection using access layer interface between a first RAT is LTE and a second RAT is UMTS,
- measuring, by means of the access layer interface, certain measurements on cells controlled by a second network entity different to a first network entity controlling the cell where the User Equipment is allocated,
- retrieving static information on User Equipments controlled by said second network entity, and
- enabling network entities to trigger commands to setup, modify and release control plane and user plane connections between both RATs.

7. Method according to claim 6 wherein the measurements are carried out by an information retrieval module of the access layer interface.

8. Method according to either claim 6 or 7 wherein the first RAT is UMTS and the second RAT is LTE.

9. Method according to any one of claims 6 to 8 wherein the first and second network entities are selected from the group consisting of: eNB, RNC and NodeB.

10. Method according to any one of claims 6 to 8 wherein certain measurements on cells comprises measurement of load in a cell wherein said load is selected from:
- load for real time (RT), and
- load for non-real time (NRT) services for uplink (UL) and downlink (DL).

11. Method according to claim 110wherein the real time (RT) /Non Real Time (NRT) is determined according to the following traffic classes: conversational, streaming, interactive and background.

12. Method according to claim 10 wherein the cell load is:
a relative amount of resources used/free; or
an absolute amount of free capacity (e.g. in Kbps) in the cell.

13. Method according to any one of claims 6 to 12 further comprising the eNB performing a handover from LTE to 3G wherein the certain measurements comprises a 3G Cell load related to a Percentage of 3G Cell Capacity in terms of Hardware usage.

14. Method according to any one of claims 6 to 12 further comprising the eNB to perform a handover from 3g to LTE wherein the certain measurement comprises a LTE Cell load expressed as percentage of used/free Cell Capacity in terms of: TX power, Uplink capacity, and Hardware resources for signalling/user plane.

15. Method according to any one of claims 6 to 12 wherein the load also comprises capacities that the operator reserves for specific traffic classes or services might be taken into account since they limit the maximum load that is possible.
